# EUROPÄISCHE PATENTSCHRIFT

(11) **EP 0 531 846 B1**
(45) Veröffentlichungstag und Bekanntmachung des Hinweises auf die Patenterteilung: **20.09.1995**
(21) Anmeldenummer: 92114836.7
(22) Anmeldetag: 31.08.1992
(51) Int. Cl.: G03B 42/04, G03D 13/00

(54) **Magazin für Blattfilme und Entnahmevorrichtung**
Magazine for sheet films and unloading device
Magasin pour films en forme de feuilles et dispositif de décharge

(30) Priorität: 13.09.1991 DE 4130562
(43) Veröffentlichungstag der Anmeldung: 17.03.1993
(73) Patentinhaber: Agfa-Gevaert AG, 51373 Leverkusen (DE)
(72) Erfinder: Pietsch, Gerald, Dipl.-Ing., B-8950 Kaufbeuren (BE); Schausberger, Helmut, W-8000 München 90 (BE); Vaessen, Bart, B-4818 GL Breda (BE)

(56) Entgegenhaltungen:
- WO-A-88/09526
- US-A- 3 265 383
- US-A- 3 891 854
- US-A- 5 019 848

## Beschreibung

Die Erfindung betriffl ein lichtdichtes Magazin zur Aufbewahrung belichteter, nicht entwickelter Blattfilme nach dem Oberbegriff von Anspruch 1 und eine Entnahmevorrichtung nach dem Oberbegriff von Anspruch 6.

Röntgenaufnahmen werden heute in vielen Bereichen verwendet, beispielsweise in der medizinischen Diagnostik oder bei der zerstörungsfreien Werkstoffprüfung. Nach der Aufnahme müssen die Blattfilme entwickelt werden, um das latente Bild sichtbar zu machen. Aus der US-A-3,265,383 ist ein sogenannter Feeder bekanntgeworden, der so ausgestaltet ist, daß drei Filmstapel eines vorgegebenen Formats eingelegt werden können. Um die Filme während des Einlegens nicht durch Lichteinfall zu schädigen, mußten die Entwicklungsmaschinen mit den dazugehörigen Feedern in Dunkelräumen stehen. Heute wird die Dunkelkammer nur noch benötigt, um die Aufnahmen in ein Magazin einzulegen, um sie dort für den Entwicklungsvorgang zu sammeln. Das gefüllte und geschlossene Magazin wird dann lichtdicht mit dem Feeder gekoppelt, der die Blätter einzeln dem Magazin entnimmt und dem Entwicklungsgerät zuführt.

Sowohl bei der medizinischen Diagnostik als auch bei der zerstörungsfreien Werkstoffprüfung kommen unterschiedliche Filmformate zur Anwendung. Für jedes dieser Formate ist ein eigenes Magazin notwendig, das entsprechend kodiert wird, so daß der Feeder sofort das zu verarbeitende Format erkennt. Aus der WO-A-88/09526 ist ein Magazin zur lichtdichten Aufbewahrung fotografischer Blattfilme bekannt, in dem jeweils ein Filmstapel aufbewahrt werden kann. Das Magazin weist Verstelleinrichtungen auf, so daß das Magazin an jeweils ein Filmformat angepaßt werden kann. Durch die Vielzahl der verschiedenen Formate und damit die Vielzahl der benötigten Magazine kann es hier leicht zu Verwechslungen kommen. Dies kann zu einem Fehler beim Entnahmevorgang führen, der dann entweder in der Dunkelkammer behoben werden muß oder bei dem es zur Schädigung der Aufnahmen durch Lichteinfall kommen kann.

Es ist daher die Aufgabe der Erfindung, ein Standardmagazin zur Aufnahme aller gängigen Formate zu schaffen, mit dem auch eine gemischte Verarbeitung verschiedener Formate möglich ist. Weiterhin soll eine Entnahmevorrichtung so ausgebildet werden, daß ein so beschaffenes Magazin problemlos entleert werden kann.

Die Aufgabe wird gelöst durch ein Magazin mit den kennzeichnenden Merkmalen von Anspruch 1 und einer Entnahmevorrichtung mit den kennzeichnenden Merkmalen von Anspruch 6. Das erfindungsgemäße Magazin ist so ausgebildet, daß die nebeneinander liegenden Zonen für die Filmblätter frei einteilbar sind. Wird beispielsweise ein Format verarbeitet, welches nicht die volle Breite des Magazins benötigt, so läßt sich neben der Zone für dieses Format eine weitere Zone schaffen, in der ein weiterer Stapel Filme des gleichen oder eines unterschiedlichen Formats verarbeitet werden kann. Ebenso ist es möglich, das Magazin mit drei oder vier Filmstapeln des gleichen Formats nebeneinander zu befüllen. Der Magazinboden ist mit Nuten versehen, in die Stege eingesteckt werden können. Diese Stege bilden die Trennung zwischen den Zonen für die einzelnen Filmstapel. Um die Zonen in ihrer Längsausdehnung zu begrenzen, sind Schieber vorgesehen, die in Richtung der Nuten verstellbar sind. Diese Schieber können in jeder Position fixiert werden. Im Deckel des Magazins sind ebenfalls Nuten vorgesehen, die zu den Nuten im Magazinboden korrespondieren. Dadurch ergibt sich im Querschnitt des Magazins für jede Zone ein allseitig umschlossener Raum.

In vorteilhafter Weise weist der Deckel des Magazins die gleiche Größe wie der Magazinboden auf und ist als Klappdeckel ausgebildet. Da sich das Magazin auf diese Weise vollkommen öffnen läßt, ist eine sehr leicht Befüllung möglich. In dem Klappdeckel ist ein kleinerer Schiebedeckel vorgesehen, der beim Ankoppeln des Magazins an die Entnahmevorrichtung automtisch geöffnet wird. Aus dieser Öffnung im Klappdeckel erfolgt die Entnahme der Filme.

Dadurch, daß durch die Entnahmevorrichtung dem Magazin mehrere Filme gleichzeitig entnommen werden können, ist ein schneller Entladevorgang gewährleistet. Da handelsübliche Entwicklungsgeräte so ausgelegt sind, daß sie auch die größten gängigen Formate verarbeiten können, können die gleichzeitig dem Magazin entnommenen Filme auch gleichzeitig an das Entwicklungsgerät übergeben und dort parallel entwickelt werden. Die Entnahmevorrichtung ist mit einer Kontrolleinrichtung ausgerüstet, die die Beladung des Magazins prüft und eventuelle Entnahmefehler feststellt und korrigiert. Die Belegung des Magazins wird festgestellt, indem geprüft wird, an welchem Sauger ein Vakuum aufgebaut werden kann. Weiterhin muß festgestellt werden, ob evtl. von einem Sauger, der ein Vakuum aufgebaut hat, das angehobene Blatt infolge eines Fehlers nicht übergeben wird. Die gleiche Einrichtung überprüft auch, ob zwei zusammenklebende Filmblätter von einem Stapel entnommen wurden. In vorteilhafter Weise geschieht dies durch zwei drehbar gelagerte Rollen, deren Abstand zueinander veränderbar ist. Eine bewegliche Rolle steht hierzu mit dem kürzeren Arm eines zweiarmigen Hebels in Verbindung. Das Ende des längeren Arms wird von einer elektro-optischen Einrichtung, insbesondere von einer Lichtschranke, abgetastet. Durch den Hebel werden die Abstandsänderungen zwischen den beiden Rollen so stark übersetzt, daß mit Sicherheit feststellbar ist, ob sich entweder kein Filmblatt, nur ein Film oder mehrere übereinanderliegende Filme zwischen den beiden Rollen befinden.

Um zu verhindern, daß evtl. Entwicklerdämpfe aus dem Entwicklungsgerät in die Entnahmevorrichtung übertreten und dort zur Korrosion von Metallteilen führen, oder die Entwicklerdämpfe sogar bis in das Magazin weitergeleitet werden und dort zu einer Vorentwicklung führen, ist in der Entnahmevorrichtung ein Gebläse angebracht, welches einen gewissen Überdruck erzeugt und dadurch das Eindringen von Entwicklerdämpfen unmöglich macht.

In vorteilhafter Weise ist die Entnahmevorrichtung so aufgebaut, daß sie entweder direkt an ein Entwicklungsgerät angekoppelt werden kann oder daß die Anbindung über eine anpaßtbare Übergangsstrecke möglich ist. Dadurch können auch Entnahmevorrichtungen, die ursprünglich nur für eine Einzelfilmbeschickung ausgerüstet sind, so umgerüstet werden, daß mit dem erfindungsgemäßen Magazin gearbeitet werden kann.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

Es zeigen:
- Fig. 1: ein erfindungsgemäßes, voll aufgeklapptes Magazin in Aufsicht,
- Fig. 2: einen Querschnitt durch das geschlossene Magazin,
- Fig. 3: eine erfindungsgemäße Entnahmevorrichtung,
- Fig. 4: die Entnahmevorrichtung nach Fig. 3 mit übergangsstrecke zur Ankopplung an unterschiedliche Entwicklungsgeräte,
- Fig. 5: eine Einrichtung zur Prüfung des Blatteinzugs in Vorderansicht, und
- Fig. 6: einen Querschnitt durch Fig. 5.

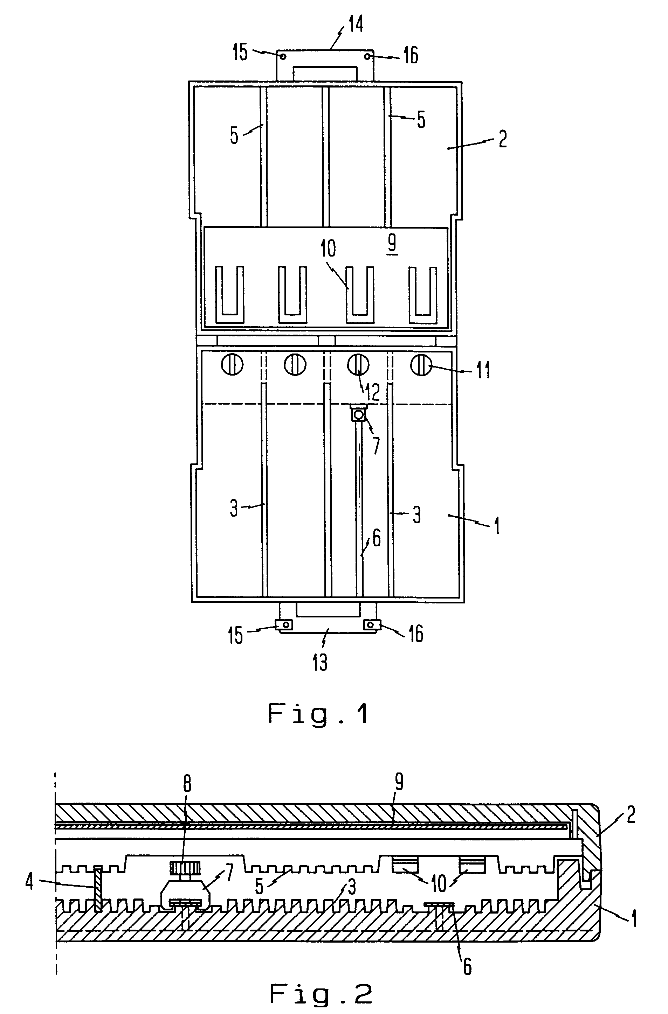

Das in Fig. 1 und Fig. 2 dargestellte Magazin besteht aus einem Magazinboden 1 und einem Magazindeckel 2. Der Magazinboden enthält nutförmige Vertiefungen 3, von denen in Fig. 1 aus Übersichtsgründen nur drei Nuten dargestellt sind. In die Nuten 3 sind Stege 4 einsteckbar. Korrespondierende Nuten 5 befinden sich im Deckel 2. Zusätzlich sind im Boden 1 Schienen 6 angebracht, auf denen Schieber 7 mit Hilfe der Schrauben 8 in jeder Stellung fixierbar sind. Diese Schieber 7 bilden die Längsbegrenzung der einzelnen Zonen für die Filmstapel. Das gezeigte Magazin ist so ausgelegt, daß vier Filmstapel nebeneinander aufgenommen werden können. Das Magazin kann mit Hilfe der Stege 4 und der Schieber 7 auch so eingeteilt werden, daß ein, zwei oder drei Stapel nebeneinander verarbeitet werden können. Da bei geschlossenem Magazin zwischen der Schraube 8 und dem Deckel 2 ein schmaler Schlitz verbleibt, durch den besonders schmale Filmformate hindurchrutschen könnten, sind an dem Schiebedeckel 9 zusätzlich Niederhalter 10 vorgesehen, die die Filmstapel auch bei unvorsichtiger Handhabung des Magazins gegen den Magazinboden 1 drücken. Im Bereich der Entnahmeöffnung, die durch den Schiebedeckel 9 verschlossen ist, sind im Magazinboden 1 vier kreisförmige Vertiefungen 11 vorgesehen, die einen nochmals tieferliegenden Schlitz 12 aufweisen. Ist an dieser Stelle des Magazins kein Filmblatt vorhanden, so trifft der entsprechende Sauger in diese Vertiefung 11. Da durch den Schlitz 12 immer Luft nachströmen kann, kann an diesem Sauger kein Vakuum aufgebaut werden. Auf diese Weise läßt sich folglich das Vorhandensein oder Nichtvorhandensein von Filmen feststellen. Das Magazin weist am Magazinboden und am Magazindeckel je eine Griffhälfte 13, 14 auf, die mit zwei unabhängig voneinander arbeitenden Schließmechanismen 15, 16 ausgerüstet sind. Da beide Schließmechanismen betätigt werden müssen, um das Magazin zu öffnen, kann praktisch eine unbeabsichtigte Öffnung ausgeschlossen werden.

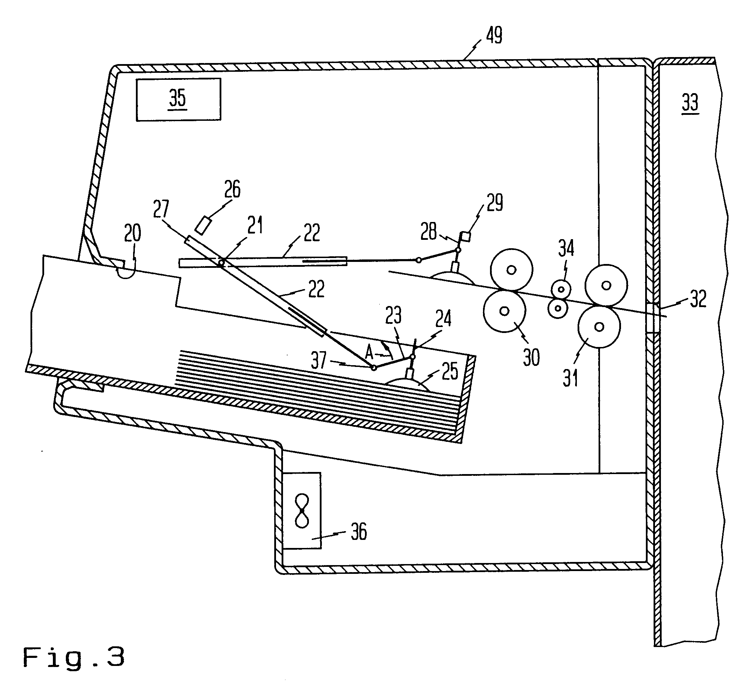

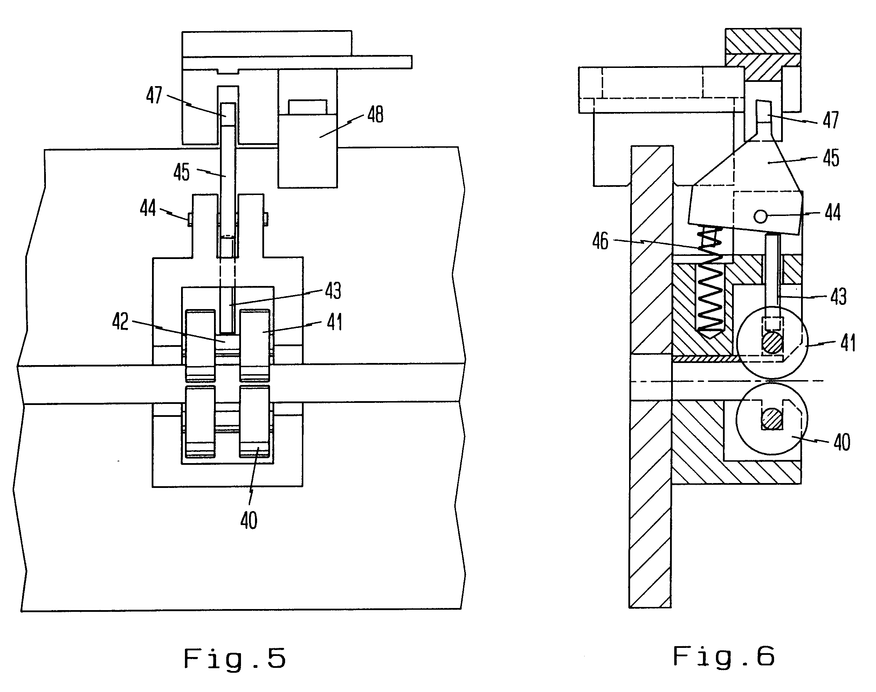

Um die Filme entladen und der Entwicklungsvorrichtung zuführen zu können, wird das Magazin über den Magazinschacht 20, wie in Fig. 3 gezeigt, in die Entnahmevorrichtung eingeführt. Dabei wird der Schiebedeckel 9 in nicht dargestellter Weise automatisch geöffnet. In der Vorrichtung sind zwei um die Drehachse 21 gelagerte Teleskopstangen 22 vorgesehen. An ihnen ist je ein Hebel 23 schwenkbar gelagert. Die anderen Enden der beiden Hebel 23 sind durch die Stange 24 fest miteinander verbunden. Auf diese Stange sind vier Sauger 25 montiert. Der Mikroschalter 26 wird durch die Verlängerung 27 des Teleskoparmes 22 betätigt. Der Fortsatz 28 auf dem Sauger 25 wirkt auf den Mikroschalter 29 ein. Von den Transportwalzenpaaren 30, 31 werden die Filme in die Einfuhröffnung 32 des Entwicklungsgerätes 33 gefördert. Zwischen den Transportwalzenpaaren befindet sich die Prüfvorrichtung 34, die in den Figuren 5 und 6 näher dargestellt ist. Für jeden Sauger 25 ist eine Prüfvorrichtung 34 vorgesehen.

Jede dieser Einrichtungen besteht aus einer festen Rolle 40 und einer beweglichen Rolle 41. Die Achse 42 der Rolle 41 wirkt mit einem Stift 43 zusammen. Oberhalb dieses Stiftes ist ein um die Achse 44 drehbar gelagerter Hebel 45 angeordnet. Die Feder 46 wirkt so auf den Hebel 45 ein, daß dieser den Stift 43 und damit die Rolle 41 in ihre tiefstmögliche Stellung drückt. An seinem oberen Ende ist der Hebel 45 mit einer Fahne 47 versehen, deren Stellung sich entsprechend der Stellung der Rolle 41 verändert. Die Stellung der Fahne 47 wird über die Lichtschrankeneinrichtung 48 abgetastet. Die gezeigte Stellung stellt den Zustand dar, wenn sich zwischen den Rollen 40 und 41 ein Blattfilm befindet.

Ist nun das Magazin in den Magazinschacht 20 eingeschoben und der Schiebedeckel 9 geöffnet, so beginnt der von der Elektronik 35 gesteuerte Entladevorgang. Hierzu werden die Teleskopstangen 22 so um die Achse 21 geschwenkt, daß sich die Sauger 25 in das offene Magazin absenken. Diese Bewegung wird gestoppt, wenn einer der vier in den Saugern 25 vorgesehenen Mikroschalter (nicht dargestellt) durch einen Filmstapel betätigt wird. Nun wird in den Saugern ein Vakuum aufgebaut und jeweils das oberste Blatt der Filmstapel angesaugt. Durch eine Schwenkbwegung der Hebel 23 um die Achse 37 in Richtung des Pfeiles A wird das oberste Blatt in seinem vorderen Bereich abgehoben. Durch diesen Abknickvorgang lösen sich normalerweise auch Filmblätter, die an dem darunterliegenden Blatt anhaften. Nun werden die Teleskopstangen 22 und die Hebel 23 so verschwenkt, daß die Filmblätter durch eine Verlängerung der Teleskopstangen tangential zwischen die Transportrollen 30 eingeführt werden können. Auch diese Stellung ist in Figur 3 dargestellt.

Die Steuerung des Entladevorgangs durch die Elektronik 35 erfolgt in folgender Weise: Beim Stoppen der Eintauchbewegung der Sauger 25 in das Magazin wird festgestellt, an welchem der Sauger ein Vakuum aufgebaut werden kann. Da die Filmstapel im Magazin normalerweise eine unterschiedliche Höhe aufweisen, wird beim ersten Entladevorgang nur bei ein oder zwei Saugern ein Vakuum aufgebaut werden. In diesem Fall werden dann der oder die Stapel so weit abgebaut, bis alle Stapel die gleiche Höhe aufweisen. Während des Anhebens der Filmblätter ist folglich bereits bekannt, welcher der vier Sauger ein Vakuum aufgebaut hat und folglich auch, an welcher der vier Prüfeinrichtungen 34 ein Filmblatt erwartet wird. Haben beispielsweise alle vier Sauger ein Vakuum aufgebaut, muß an allen vier Prüfeinrichtungen 34 auch ein Filmblatt detektiert werden. In diesem Fall sperrt die Fahne 47 den Strahl der Lichtschranke 48. Ein Fehler ist dann aufgetreten, wenn an einer der Prüfeinrichtungen 34 die Lichtschranke 48 nicht gesperrt wird, also kein Blatt detektiert wird. In diesem Fall werden die Transportrollen 30 in entgegengesetzter Richtung angetrieben und die Filmblätter zurückgeworfen. Der Vorgang wird dann wiederholt. Wird die Lichtschranke 48 kurz unterbrochen und ist danach wieder durchgängig, so befinden sich zwischen den Rollen 40 und 41 zwei oder mehr Filmblätter. Das bedeutet, daß der Trennvorgang fehlerhaft abgelaufen ist und durch einen oder mehrere der Sauger 25 nicht nur ein Filmblatt abgehoben wurde. Auch in diesem Fall werden die Filmblätter zurückgeworfen und der Vorgang wiederholt. Hierzu besteht zum einen die Möglichkeit, die Abknickzeit, zu verlängern, also die Zeit, die die Sauger 25 in ihrer Stellung nach dem Verschwenken des Arms 23 um die Achse 37 verharren, bevor das Filmblatt durch das Verschwenken des Teleskoparms 22 ganz abgehoben wird. Zum anderen besteht die Möglichkeit, den Abknickwinkel, also den Schwenkwinkel des Armes 23 um die Achse 37 zu vergrößern. In bevorzugter Weise wird die Abknickzeit bei jedem weiteren Entnahmeversuch verdoppelt. Hierdurch besteht die größte Möglichkeit, die Entladung letztendlich erfolgreich zu beenden. Bei einer Doppelblatterkennung in der Prüfeinrichtung 34 wird der Entnahmevorgang dreimal durchgeführt, beim letzten Versuch also mit vierfacher Abknickzeit. Sollten die Blätter selbst dann noch nicht erfolgreich getrennt werden können, wird eine akustische oder optische Fehlermeldung generiert und das Magazin muß in der Dunkelkammer geöffnet und der Trennvorgang von Hand durchgeführt werden.

Wurde das letzte Filmblatt aus dem Magazin entladen, so fallen die Sauger 25 in die Öffnungen 11 des Magazinbodens, so daß der Aufbau eines Vakuums unmöglich wird. Da das Nichtaufbauen eines Vakuums aber auch andere Ursachen haben kann, ist zur Sicherheit noch der Mikroschalter 26 vorgesehen, der in dieser Stellung der Sauger von der Verlängerung 27 betätigt wird. Die Sauger werden dann in eine Ruhestellung verfahren und das leere Magazin kann entnommen werden.

Um das Vakuum abschalten zu können, sobald ein Film an die Transportrollen 30 übergeben wurde, ist der Mikroschalter 29 vorgesehen. Sobald der Sauger in einer Position ist, in der die Rollen 30 den Film sicher erfaßt haben, wird der Mikroschalter 29 durch den Fortsatz 28 betätigt und dadurch das Vakuum abgeschaltet. Selbstverständlich können die Mikroschalter 26 und 29 auch durch Lichtschrankeneinrichtungen ersetzt werden.

Durch das Gebläse 36 wird in dem Gehäuse 37 der Entnahmevorrichtung ein leichter Überdruck erzeugt, so daß durch den Schlitz 32 des Entwicklungsgeräts keine Entwicklungsdämpfe eindringen können.

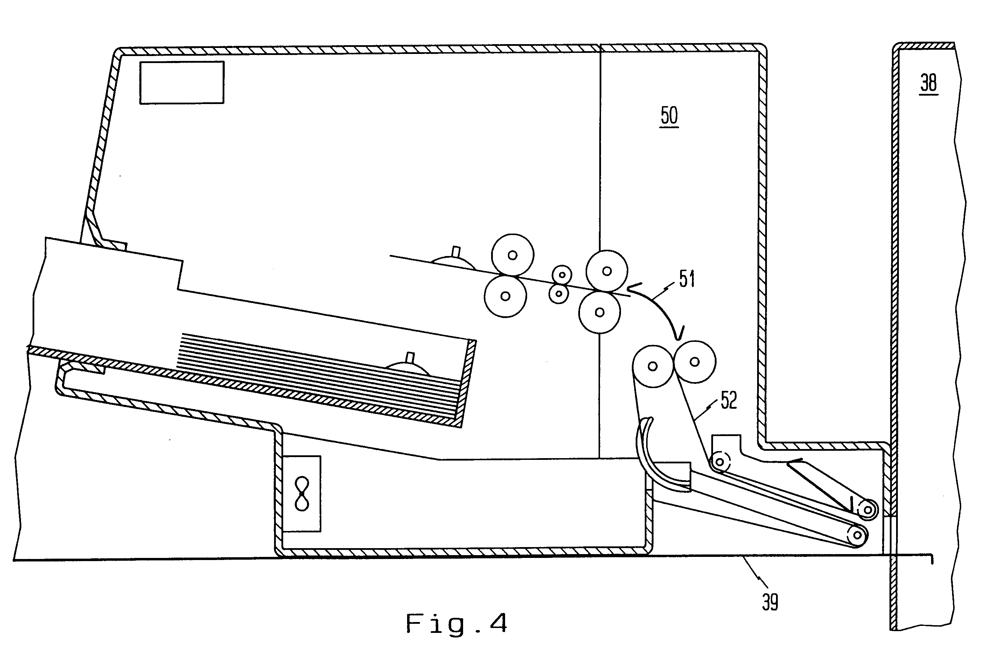

Figur 4 zeigt ein Entwicklungsgerät 38, das mit einem Tisch 39 zur Einzeleingabe von Filmblättern in der Dunkelkammer ausgerüstet ist. Um auch ein solches Entwicklungsgerät über ein Magazin mit Filmen versorgen zu können, wird die Entnahmevorrichtung mit einem zusätzlichen Bauteil, einer übergangsstrecke 50, versehen. Diese weist eine zusätzliche Führung 51 und ein Transportband 52 auf. Über diese übergangsstrecke werden die Filme zu dem direkt über dem Eingabetisch 39 befindlichen Einfuhrschlitz 32 des Entwicklungsgeräts 38 befördert. Die Entnahmevorrichtung ist damit praktisch für alle handelsüblichen Entwicklungsgeräte verwendbar.

## Patentansprüche

1. Lichtdichtes Magazin zur Aufbewahrung belichteter, nicht entwickelter Blattfilme mit wenigstens einer verschließbaren Öffnung zum Einlegen und zur Entnahme der Filme, dadurch gekennzeichnet, daß das Magazin (1, 2) durch Verstelleinrichtungen (3 - 8) begrenzte Zonen zur Aufnahme von nebeneinander liegenden Stapeln von Filmen unterschiedlichen Formats aufweist.

2. Magazin nach Anspruch 1, dadurch gekennzeichnet, daß im Magazinboden (1) Nuten (3) vorgesehen sind, in die Stege (4) einsteckbar sind.

3. Magazin nach Anspruch 2, dadurch gekennzeichnet, daß im Magazinboden (1) in Richtung der Nuten (3) verstellbare und fixierbare Schieber (7) vorgesehen sind.

4. Magazin nach Anspruch 1, dadurch gekennzeichnet, daß das Magazin einen Klappdeckel (2) in der Größe des Magazinbodens (1) aufweist und der Klappdeckel (2) mit einem Schiebedeckel (9) geringerer Größe versehen ist.

5. Magazin nach Anspruch 2, dadurch gekennzeichnet, daß der Deckel (2) mit korrespondierenden Nuten (5) versehen ist.

6. Vorrichtung zur Entnahme belichteter Blattfilme aus einem Magazin nach Anspruch 1 und zur Übergabe an eine Entwicklungsvorrichtung (33) mit einer lichtdichten Koppeleinrichtung (20) für das Magazin, die eine Einrichtung zur Öffnung des Magazindeckels (9) aufweist, mit Saugern (25) zur Entnahme der Filme und einer Transportvorrichtung (30, 31, 34) zur Übergabe der Filme an die Entwicklungsvorrichtung (33), dadurch gekennzeichnet. daß Einrichtunqen vorgesehen sind, die eine Entnahme von mehreren Filmen unterschiedlichen Formats gleichzeitig ermöglichen.

7. Vorrichtung nach Anspruch 6, dadurch gekennzeichnet, daß eine Kontrolleinrichtung (35) vorgesehen ist, die die Entnahme der Filme aus dem Magazin überwacht.

8. Vorrichtung nach Anspruch 7, dadurch gekennzeichnet, daß Einrichtungen vorhanden sind, die feststellen, ob an den Saugern ein Vakuum aufgebaut wird.

9. Vorrichtung nach Anspruch 7, dadurch gekennzeichnet, daß Einrichtungen (34) vorhanden sind, die feststellen, ob kein Film, ein Film oder mehrere übereinanderliegende Filme entnommen wurden.

10. Vorrichtung nach Anspruch 9, dadurch gekennzeichnet, daß die Einrichtungen (34) zwei drehbar gelagerte Rollen (40, 41) aufweisen, zwischen denen die Blätter durchgeführt werden, von denen eine Rolle (41) relativ zu der anderen (40) beweglich angeordnet ist, die bewegliche Rolle mit dem kürzeren Arm eines zweiarmigen Hebels (45) in Verbindung steht und die Stellung des längeren Arms (47) des Hebels elektro-optisch abgetastet wird.

11. Vorrichtung nach Anspruch 6, dadurch gekennzeichnet, daß ein Gebläse (36) zur Erzeugung eines Überdrucks in der Vorrichtung vorgesehen ist.

12. Vorrichtung nach Anspruch 6, dadurch gekennzeichnet, daß die Vorrichtung mit einer Übergangsstrecke (50) zur Koppelung der Vorrichtung an Dunkelraumentwicklungsgeräte für Einzeleingabe ausrüstbar ist.

## Claims

1. Light-tight magazine for storing exposed, non-developed sheet films, with at least one closable opening for introducing and removing the films, characterised in that the magazine (1, 2) comprises zones which are defined by adjustment devices (3 - 8) for holding stacks of films, which lie side by side, of different formats.

2. Magazine according to claim 1, characterised in that grooves (3), in which thin plates (4) can be inserted, are provided in the magazine bottom (1).

3. Magazine according to claim 2, characterised in that slide members (7), which can be displaced in the direction of the grooves (3) and fixed, are provided in the magazine bottom (1).

4. Magazine according to claim 1, characterised in that the magazine comprises a hinged lid (2), which is of the same size as the magazine bottom (1), and the hinged lid (2) is provided with a sliding lid (9) of a smaller size.

5. Magazine according to claim 2, characterised in that the lid (2) is provided with corresponding grooves (5).

6. Apparatus for removing exposed sheet films from a magazine according to claim 1 and for delivering them to a development apparatus (33) with a light-tight coupling device (20) for the magazine, which apparatus comprises a device for opening the magazine lid (9), with suction members (25) for removing the films and a transport apparatus (30, 31, 34) for delivering the films to the development apparatus (33), characterised in that devices which enable a plurality of films of different formats to be simultaneously removed are provided.

7. Apparatus according to claim 6, characterised in that a control device (35) is provided to monitor the removal of the films from the magazine.

8. Apparatus according to claim 7, characterised in that devices are provided to establish whether a vacuum is being created at the suction members.

9. Apparatus according to claim 7, characterised in that devices (34) are provided to establish whether no film, one film or a plurality of superimposed films has/have been removed.

10. Apparatus according to claim 9, characterised in that the devices (34) comprise two rotatably mounted rolls (40, 41), between which the sheets are passed, one roll (41) of which is arranged such that it can move relative to the other (40), the mobile roll is connected to the shorter arm of a two-armed lever (45), and the position of the longer arm (47) of the lever is sensed by optoelectronic means.

11. Apparatus according to claim 6, characterised in that a blower (36) is provided to produce a pressure above atmospheric in the apparatus.

12. Apparatus according to claim 6, characterised in that the apparatus can be provided with a transition section (50) for coupling the apparatus to darkroom development equipment for individual film feed.

## Revendications

1. Magasin étanche à la lumière pour le stockage de films exposés, non encore développés, comprenant au moins une ouverture obturable pour le chargement et l'extraction des films, caractérisé en ce que le magasin (1, 2) présente des zones, limitées par des dispositifs de réglage (3 à 8), propres à recevoir des piles de films de différents formats juxtaposées.

2. Magasin selon la revendication 1, caractérisé en ce que, dans le fond (1) sont prévues des rainures (3) dans lesquelles des réglettes (4) peuvent être encastrées.

3. Magasin selon la revendication 2, caractérisé en ce que, dans le fond (1) du magasin, sont prévus des coulisseaux (7) qui peuvent être déplacés parallèlement aux rainures (3) et peuvent être bloqués.

4. Magasin selon la revendication 1, caractérisé en ce que le magasin présente un couvercle abattant (2) de la dimension du fond (1) du magasin et le couvercle abattant (2) est muni d'un couvercle coulissant (9) de plus petite dimension.

5. Magasin selon la revendication 2, caractérisé en ce que le couvercle (2) est muni de rainures (5) correspondantes.

6. Dispositif pour extraire des films exposés d'un magasin, selon la revendication 1, et pour les transférer à un appareil de développement (33), équipé d'un dispositif d'accouplement (20) étanche à la lumière pour le magasin, qui comprend un dispositif servant à ouvrir le couvercle (9) du magasin, des ventouses (25) servant à prélever les films et un dispositif de transport (30, 31, 34) servant à transférer les films à l'appareil de développement (33), caractérisé en ce qu'il est prévu des dispositifs qui permettent d'extraire simultanément plusieurs films de différents formats.

7. Dispositif selon la revendication 6, caractérisé en ce qu'il est prévu un dispositif de contrôle (35) qui surveille l'extraction des films du magasin.

8. Dispositif selon la revendication 7, caractérisé en ce qu'il est prévu des dispositifs qui détectent si un vide s'est formé dans les ventouses.

9. Dispositif selon la revendication 7, caractérisé en ce qu'il est prévu des dispositifs (34) qui détectent si aucun film, un film ou plusieurs films superposés ont été extraits.

10. Dispositif selon la revendication 9, caractérisé en ce que les dispositifs (34) comprennent deux rouleaux (40, 41) montés rotatifs, entre lesquels les films sont introduits, l'un (41) des rouleaux étant disposé mobile par rapport à l'autre (40), le rouleau mobile est en liaison avec le bras court d'un levier à deux bras (45) et la position du bras long (47) du levier est palpée par voie électro-optique.

11. Dispositif selon la revendication 6, caractérisé en ce qu'il est prévu un ventilateur (36) servant à produire une surpression dans le dispositif.

12. Dispositif selon la revendication 6, caractérisé en ce que le dispositif peut être équipé d'un pont de transfert (50) servant à accoupler le dispositif à des appareils de développement à chambre noire pour l'introduction individuelle.
